# EUROPEAN PATENT SPECIFICATION

(11) **EP 0 683 138 B1**
(45) Date of publication and mention of the grant of the patent: **04.04.2001**
(21) Application number: 95107548.0
(22) Date of filing: 17.05.1995
(51) Int. Cl.: C02F 3/00, C02F 3/30, C02F 1/58, C02F 1/28

(54) **Process for making photoprocessing waste solution harmless**
Verfahren zum Unschädlichmachen von verunreinigten Lösungen aus Photoprozessen
Procédé pour neutraliser des solutions impures provenant de procédés photographiques

(30) Priority: 18.05.1994 JP 10406394
(43) Date of publication of application: 22.11.1995
(73) Proprietor: FUJI PHOTO FILM CO., LTD., Kanagawa-ken (JP)
(72) Inventor: Suzuki, Seiji, Minami Ashigara-shi, Kanagawa (JP); Hara, Naoko, Minami Ashigara-shi, Kanagawa (JP)
(74) Representative: Grünecker, Kinkeldey, Stockmair & Schwanhäusser Anwaltssozietät

(56) References cited:
- WO-A-92/04285
- PATENT ABSTRACTS OF JAPAN vol. 095, no. 003, 28 April 1995 & JP 06 335384 A (FUJI PHOTO FILM CO LTD), 6 December 1994,

## Description

This invention relates to a process for making a waste solution containing organic aminocarboxylic acids (for example, ethylenediaminetetraacetic acid (hereinafter referred to simply as EDTA)) which are used in a large amount in various industries. This invention relates to a process for making a waste solution harmless, which solution results from processing of silver halide photosensitive materials and is discharged from color and black-and-white photographic laboratories, plate-making and printing offices, hospitals, etc.

Organic aminocarboxylic acids such as EDTA have been used in various fields, for example, mainly paper (bleaching agents), fibers (dyeing aids), detergents such as soaps and synthetic detergents, detergents for cleansing boilers, metallic surface of machineries and glass surfaces, plating, photography and processing solutions therefor, cosmetics, foods (stabilizers), drugs (stabilizers), synthetic rubbers (polymerization initiators) and vinyl chloride resins (heat stabilizers). Waste water and waste solutions from these plants, which cannot be dumped into the environment as such, are treated by some methods. For example, a waste solution which results from processing of silver halide photosensitive materials (hereinafter referred to simply as a photoprocessing waste solution) and is discharged from color and black-and-white photographic laboratories, plate-making and printing offices, hospitals, etc. is recovered from the discharge sites by waste material collectors, subjected to the recovery of silver and then mostly dumped into the sea at the present stage. In these days with the increasing interest in the environmental problems, however, the situation has begun to take a turn for the prohibition on the dumping.

Known methods for making photoprocessing waste solution harmless include biological treatments, electrolytic oxidation, ion exchange, reverse osmosis and physicochemical treatments. However none of these processing method can achieve any satisfactory effect when employed alone.

The ion exchange process and the reverse osmosis process each fails to achieve any satisfactory effect when employed alone. On the other hand, the electrolytic oxidation process and the chemical oxidation process suffer from serious problems of the consumption of much electric power and the high cost of chemicals, respectively.

In order to make a waste solution containing COD components at a relatively high concentration harmless, there has been also known a method called the wet oxidation method or Zimmermann method which comprises introducing an oxygen-containing gas into the waste solution at an elevated temperature under an elevated pressure to thereby degrade the COD components thorough liquid phase oxidation. However this method is disadvantageous in achieving only a low reaction ratio and failing to completely eliminate organic matters. In addition, the major portion of ammonia contained in the waste solution is not degraded but remains in this case.

In order to solve these problems, the wet oxidation is performed in the presence of an oxidation catalyst and thus the COD components and the ammonia concentration in the waste solution can be largely reduced. It is also proposed to biologically treat the waste solution, which has been thus treated, to thereby completely degrade the organic matters in the waste solution to the level of carbon dioxide or water. Although this process is an excellent one from the viewpoint of the achievement of a high harmlessness, it suffers from a problem of requiring a high cost for the equipment.

Biological treatments, which are typically exemplified by the activated sludge method and biological filtration, scarcely exhibit any effect on materials with low biodegradability. For example, when a photoprocessing waste solution is treated with aerobic activated sludge, for example, the treatment can be completed at a ratio of about 80 % (expressed in the treatment ratio of COD_{Mn}, the term "COD_{Mn}" means a chemical oxygen demand measured with the use of potassium permanganate as an oxidizing agent). However, there is a problem that hardly degradable components such as EDTA remaining in the photoprocessing waste solution can be hardly degraded thereby. Provided that a photoprocessing waste solution can be made harmless exclusively by biological treatments, a highly advantageous processing method (i.e., consuming less energy, requiring a low operation cost, enabling a clean treatment by taking advantage of purification system in nature, etc.) will be established.

There have been proposed several methods for biologically degrading EDTA, for example, a method wherein a microorganism belonging to the genus *Pseudomonas* or *Alcaligenes* is used (JP-A-58-43782; the term "JP-A" as used herein means an "unexamined published Japanese patent application"); a method wherein a microorganism belonging to the genus *Agrobacterium* is used (Applied And Environmental Microbiology, vol. 56, p. 3346 - 3353 (1990)); and a method wherein a gram-negative isolate is used (Applied And Environmental Microbiology, vol. 58, No. 2, p. 671 - 676 (Feb, 1992)). However, none of these methods makes it possible to biologically degrade organic aminocarboxylic acids in a stable state and at a high degradation efficiency. Moreover, these methods cannot be easily carried out, since a specific bacterium should be isolated and used therein.

The present invention aims at providing a novel method for effectively solving the above-described problems encountering in the process for biologically treating a waste solution containing organic aminocarboxylic acids (for example, a photoprocessing waste solution)(hereinafter referred to as "that waste solution").

That is to say, the present invention aims at establishing a means for making that waste solution harmless comprising degrading hardly degradable components in that waste solution through biological treatments and thus reducing the COD value of that waste solution, which means contaminates neither water nor the atmosphere, can be effectively performed at a low cost and causes no environmental pollution.

It is the object of the present invention to provide a biological treatment process for effectively degrading hardly degradable components contained in that waste solution which has been subjected to a treatment with aerobic activated sludge or an anaerobic treatment.

According to the present invention this object can be achieved by a process for making a waste solution containing organic aminocarboxylic acids harmless which comprises biologically treating the waste solution containing organic aminocarboxylic acids followed by another biological treatment in the presence of activated carbon.

It is preferred that the waste solution is a photoprocessing waste solution.

The process according to the present invention preferably comprises a step of biological nitrification and denitrification.

It is further preferred that the denitrification step is carried out before the nitrification step and the solution obtained from said nitrification step is returned to said denitrification step to thereby perform nitrification and denitrification.

The biological treatment in the presence of activated carbon is preferably performed under aerobic conditions.

It is preferred that the biological treatment in the presence of activated carbon is performed by an activated carbon fluidized bed method.

It is preferred that the biological treatment in the presence of activated carbon is performed by using a combination of an activated carbon made from pitch with an activated carbon made from coal or coconut shell.

Now, the present invention will be described in greater detail.

The present invention will be explained, taking the case of a photoprocessing waste solution as a waste solution containing organic aminocarboxylic acids.

The photoprocessing waste solution to be used in the present invention is a waste solution formed during the process of the development of various silver halide photosensitive materials. In usual, such a waste solution is separated into a fixing-series solution (i.e., silver-recovery system) containing silver and a development-series solution free from silver prior to the recovery. Next, silver is recovered from the fixing-series solution by a collector and then the residual fixing-series solution is combined with the development-series solution and treated as a photoprocessing waste solution. In the present invention, use can be made of the waste from the fixing-series solution (silver-recovery system), the waste from the development-series solution and a mixture thereof.

A process for the biological treatment of such a photoprocessing waste solution is disclosed in JP-A-4-200798. This method comprises mixing a waste solution from the silver-recovery system with one from the development-series solution at a ratio of 1 : 1, diluting the mixture with water so as to give an inorganic salt concentration of 1 to 3 weight/volume % (that is, 1 to 3 g of the inorganic salt per 100 ml of the diluted waste solution) and aerobically treating the waste solution with activated sludge containing sulfur-oxidizing bacteria to thereby treat about 80 % of COD_{Mn} thereof.

Although a waste solution of a high COD concentration can be treated in a stable state by this method, the solution thus treated still contains residual components at about 800 ppm of COD_{Mn}. Therefore, it is required to further purify or antidote this treated solution before dumping it into the environment. Also, this treated solution contains a large amount of materials which are hardly degradable by biological treatments, for example, chelating agents (ethylenediaminetetraacetic acid (EDTA) amounting the major part) and residues of the degradation with the aerobic activated sludge. The present inventors have conducted extensive studies and, as a result, found out that hardly degradable components contained in a treated solution obtained by treating a photoprocessing waste solution with, for example, aerobic activated sludge can be effectively degraded by biological treatments in the presence of activated carbon.

The process for making a photoprocessing waste solution harmless according to the present invention involves at least two biological treatment steps. It is characterized in that the first biological treatment is followed by the second biological treatment which is performed in the presence of activated carbon.

Namely, the present inventors have found out that hardly degradable components can be effectively degraded by a process wherein components of the photoprocessing waste solution which are highly degradable biologically (hereinafter referred to as highly degradable components) are degraded or made harmless in the first step, a biological treatment step (hereinafter referred to as the first step) and, subsequently, the hardly degradable component remaining in the photoprocessing waste solution are biologically treated in the presence of activated carbon. With the use of these steps, the hardly degradable components can be very effectively degraded, compared with the conventional case wherein a photoprocessing waste solution containing highly degradable components together with the hardly degradable components is biologically treated in the presence of activated carbon from the beginning.

These steps surprisingly make it possible to degrade hardly degradable components which can be hardly degraded by the conventional biological treatments, that is, chelating agents such as EDTA, color, etc.

As the biological treatment to be used in the first step among these steps, any method may be selected so long as components in the photoprocessing waste solution which are highly degradable biologically can be degraded or made harmless thereby. Either an anaerobic treatment or an aerobic one is usable therefor. Examples of the biological treatment usable herein include microbial suspension methods such as activated sludge method, anaerobic digestion, sponge-carrier method, and three-phase fluidized bed method; biofilm methods such as biological filtration, submerged bed method, fluidized bed method, rotating disc method and trickling filter method; entrapment immobilization; and auto-granulation.

These treatments may be performed either continuously or batchwise. Also, an anaerobic treatment, an aerobic one or a combination thereof may be used.

Aerobic treatments are preferable as the biological treatment to be used in the first step and, among all, the aerobic activated sludge treatment is particularly preferable therefor.

In the case of a high-load treatment, it is also preferable to employ a microbial suspension method (for example, three-phase fluidized bed method, treatment with activated sludge containing activated carbon powder) with the use of a carrier having microorganisms adhering thereto.

The microorganism to be used in the first biological treatment of the present invention may be selected from among publicly known bacteria such as *Zoogloea*, *Sphaerotilus, Pseudomonas, Bacillus, Alcaligenes, Achromobacter, Flavobacterium* and *Thiobacillus.* In the case of a high-load treatment, it is also effective to add phototrophic bacteria such as *Rhodopseudomonas capsulatus*, *Rhodopseudomonas spheroides* and *Rhodospirillum rubrum.* In the case of treating a waste solution having high salt concentration, it is also effective to add microorganisms inhabited in the sea.

It is preferable that the inorganic salt concentration of the solution to be subjected to the biological treatment of the first step does not exceed 3 weight/volume % (that is, not exceed 3 g per 100 ml of the solution). However, a photoprocessing waste solution usually contains from 12 to 14 weight/volume % of inorganic salts. It is therefore preferable in usual to dilute the photoprocessing waste solution to be subjected to the first step with water so as to give an inorganic salt concentration of 1 to 3 weight/volume %. The dilution ratio preferably ranges from 5 to 10-fold, still preferably from 8 to 10-fold. In the case of a photoprocessing waste solution with an inorganic salt concentration of 3 weight/volume % or less, no dilution is required any more.

In the case of a photoprocessing waste solution, oxidized waste solution components inhibit the activity in the biological treatment of the first step. It is, therefore, preferable to suppress the progress of the oxidation of the waste solution components as far as possible until the photoprocessing waste solution is fed into the first step.

The progress of the oxidation may be suppressed by, for example, making the upper space in an influent (waste solution to be treated) tank oxygen-free by purging with a gas such as carbon dioxide or nitrogen.

It is preferable, if required, that impurities such as contaminants, insoluble matters, etc. have been eliminated from the waste solution to be fed into the first step by, for example, filtration.

If necessary, a pre-treatment such as a treatment for eliminating metals may be performed.

In case where the biological treatment to be used in the first step is an activated sludge treatment, the mixed liquor suspended solid (MLSS) preferably ranges from 3,000 to 9,000 ppm, still preferably from 4,000 to 7,000 ppm. The treatment is preferably effected for 1 to 2 days, still preferably 2 days.

The treatment load (expressed in COD_{Mn} load) preferably ranges from 2 to 4 kg/(m³·day), still preferably from 2 to 3 kg/(m³·day).

When the biological treatment in the first step is performed by a microbial suspension method wherein a carrier having a microorganism adhering thereto is added (for example, the three-phase fluidized bed method), it is preferable that MLSS ranges from 6,000 to 15,000 ppm, still preferably from 8,000 to 12,000 ppm. The treatment time preferably ranges from 0.5 to 1.5 days, more preferably from 0.7 to 1.2 days. The treatment load (expressed in COD_{Mn} load) preferably ranges from 3 to 9 kg/(m³·day), still preferably from 4 to 6 kg/(m³·day).

The biological treatment of the first step is preferably effected at a temperature of from 10 to 40°C, still preferably from 20 to 35°C, and at a pH value of from 6.5 to 8.0, still preferably from 6.5 to 7.0.

In the above-mentioned treatment, it is preferable to perform solid/liquid separation with the use of an UF membrane or an MF membrane during or after the biological treatment.

This method is advantageous in that the sludge concentration (MLSS) in the treatment tank can be maintained at a higher level (several to thirty thousand ppm) than the one achieved by the conventional solid/liquid separation method with the use of a sedimentation tank. The use of the UF membrane or MF membrane brings about some advantages such as requiring only a small-sized equipment and causing no bulking.

It is preferable to perform the solid/liquid separation with the use of an UF membrane or an MF membrane, since high-molecular weight components are eliminated thereby and the deterioration of the activated carbon due to these high-molecular weight components can be thus prevented in a biological treatment in the presence of activated carbon effected in the second step or thereafter.

The membranes may be one made of, for example, polyacrylonitrile-series, polysulfone-series, cellulose acetate-series, polyether sulfone-series, polyolefin-series, polyimide-series or fluorine-series materials.

Examples of commercially available UF membranes include those made of polysulfone-series membrane materials (manufactured by Asahi Chemical Industry, Co., Ltd., Kurary Chemical Co., Ltd., Mitsubishi Rayon Co., Ltd., Nitto Denko Corporation, Sumitomo Bakelite Co., Ltd., ROMICON, INC., AMICON DIVISION, Millipore Corp., etc.), those made of fluorine-series membrane materials (manufactured by Rhône-Poulene, Millipore Corp., etc.), those made of polyolefin-series membrane materials (manufactured by Nitto Denko Corporation) and those made of polyacrylonitrile (PAN)-series membrane materials (manufactured by Asahi Chemical Industry, Co., Ltd., Daicel Chemical Industry, Ltd., Mitsubishi Rayon Co., Ltd. Mitsui Petrochemical Industries, Ltd., Rhône-Poulene, etc.).

Examples of the MF membrane include various Yumicron membranes (manufactured by Yuasa Kabushiki Kaisha), Millipore filters such as Millipore AA, DA, HA, PH, GS, FG, UC, UM, US, GU, HP, etc. (manufactured by Millipore Corp.), micro-filtration filters such as SF-301, SF-101, SF-401, etc. (manufactured by Kuraray Chemical Co., Ltd.), Gore-Tex Film (manufactured by Gore-Tex & Associates, Inc.), and hollow fiber mono-layered MF membranes (Kuraray SF filter (made of polyvinyl alcohol, pore size: 0.1 µm, manufactured by Kuraray Chemical Co., Ltd.), SR-205 (made of polyolefin, pore size: 0.1 µm, manufactured by Asahi Chemical Industry Co., Ltd.), E202AE (made of fluorine resin, pore size: 0.2 µm, manufactured by Nitto Denko Corp.), Stellapore STNM424 (made of polyethylene, pore size: 0.1 µm, manufactured by Mitsubishi Rayon Co., Ltd.), etc. ).

In the case of the shortage of nutritive salts such as nitrogen and phosphorus, it is required to add these substances either directly to a biological treatment tank or to the photoprocessing waste solution before introducing into the biological treatment tank. Nitrogen may be in any form so long as microorganisms can utilize the same. For example, (NH₄)₂SO₄ and urea are usable therefor. Similarly, phosphorus may be in any form so long as microorganisms can utilize the same. For example, K₂HPO₄, KH₂PO₄ and Na₂HPO₄ are usable therefor.

It is usually unnecessary to add any nitrogen component, since a photoprocessing waste solution usually contains a sufficient amount of nitrogen in the form of ammonium ion. The phosphorus concentration preferably ranges from 1 to 3 % by weight, still preferably from 2 to 3 % by weight, of BOD.

The biological treatment in the presence of activated carbon to be performed in the second step or thereafter may be any one so long as it is a biological treatment effected in the coexistence of activated carbon.

The activated carbon to be used in the present invention may be an arbitrary one, so long as it contains activated carbon as a part of a carrier. It is also possible to use a microorganism/activated carbon composite carrier formed by the entrapment immobilization of activated carbon and a microorganism therefor. Furthermore, it is possible to use bone black, charcoal, etc. in place of activated carbon.

The activated carbon to be used in the present invention may be either granular, powdery or fibrous one. These activated carbons may be those made from any material, for example, coal, pitch, coconut shell, timber, charcoal, coke, or synthetic resin. Examples of the activated carbon usable in the present invention include F400, F300, PCB, BPL, CAL, CANECAL, CPG, APC (manufactured by TOYO CALGON), Kuraray Coal KW (manufactured by Kuraray Chemical Co., Ltd.), BAC (manufactured by Kureha Chemical Industry Co., Ltd.), FX-300 (manufactured by Toho Rayon Co., Ltd.) and M-30 (manufactured by Osaka Gas Co., Ltd.).

In the present invention, the bulk volume of the activated carbon in the biological treatment tank may range from 0.1 to 100 %, preferably from 10 to 80 %.

For the entrapment immobilization of the activated carbon and the microorganism as described above, any method may be employed so long as the activated carbon and the microorganism can be entrapped without causing any deterioration in the activity of the activated carbon and the composite carrier has a high physical strength and endures prolonged use in the treatment tank while sustaining the microbial activity. Examples of such a method include PVA-boric acid method, PVA-freezing method, sodium alginate method and K-carrageenan method.

The entrapment immobilization method is characterized in that the microbial cells can be maintained at a high concentration and thus the treatment efficiency can be elevated and that a microorganism growing slowly can be immobilized. Additional advantages of this method reside in that the composite carrier is highly resistant against changes in pH value and temperature over a wide range and endures high-load operation. It is also characterized by forming less sludge.

In addition to the above-described characteristics, the entrapment immobilization of activated carbon and a microorganism achieves another advantage that no powdery activated carbon flows out from the treatment tank.

Since bacteria are larger than the pores on the surface of an immobilization gel, leakage of the bacteria, which have been entrapped and immobilized, scarcely occurs. Thus the bacteria grow inside of the gel and undergo autolysis. Accordingly, soluble components of the waste solution are exclusively incorporated into the gel and then processed with the bacteria inside thereof.

These immobilization methods are described in detail in, for example, "Biseibutsu Koteika-ho ni yoru Haisui Shori (Processing of Waste Water by Microbial Immobilization Method)", ed. by R. Sudo, Sangyo-Yosui Chosa kai (Industrial Water Research Association); "Seibutsumaku-ho ni yoru Haisui Shori no Kodo Koritsu-ka no Doko (Tendency toward Improvement in the Efficiency of Biomembrane Method for Processing Waste Water)", Y. Inamori, Suishitsu Odaku Kenkyu (Study on Water Pollution), vol. 13, No. 9, p. 563 - 574; and "Kodo Mizu Shori Gijutsu Kaihatsu no Doko, Kadai, Tenbo (Tendency, Problems and Prospects in the Development of High-Technology for Processing Water)", Y. Inamori et al., Yosui to Haisui (Industrial Water and Waste Water), vol. 34, No. 10, (1992), p. 829 - 835.

In the biological treatment in the presence of activated carbon according to the present invention, use can be made of the above-mentioned granular activated carbon, powdery activated carbon, a microorganism/activated carbon composite carrier and a carrier containing activated carbon as a part thereof which are suspended in a treatment tank. Alternatively, granular activated carbon, powdery activated carbon, a microorganism/activated carbon composite carrier or a carrier containing activated carbon as a part thereof may be used as a carrier in various biofilm methods such as biological filtration, submerged bed method, fluidized bed method and trickling filter method.

These treatments may be performed either continuously or batchwise. Also, an anaerobic treatment, an aerobic one or a combination thereof may be employed therefor.

In the present invention, it is preferable to select a method wherein microorganisms adhering to the surface of the activated carbon can be easily refreshed from among those described above. Specific examples of such a preferable method include the fluidized bed method with the use of granular activated carbon and a method wherein granular activated carbon or a carrier containing granular activated carbon as a part thereof is suspended (for example, three-phase fluidized bed method).

In the method where granular activated carbon is added and suspended in a treatment tank, from among those described above, it is preferable to perform solid/liquid separation with the use of the aforementioned UF membrane (ultrafiltration membrane) or the aforementioned MF membrane (membrane filter membrane) as a post-treatment.

Separation of processed water with the use of an ultrafiltration membrane is described in detail in "Dai 27-kai Eisei Kogaku Kenkyu Toronkai Ronbun-shu (Reports in 27th Symposium of Sanitation Technology)" (1991), p. 183 - 193; "Dai 3-kai Mizu Sogo Riyo Sisutemu Kenkyu Kaihatsu Seika Happyo-kai Yoko-shu (Proceedings of 3rd Congress for presenting the results of research and development on Total Reutilization System of Water)" (1991), p. 1 - 9, etc.

It is preferable to perform the biological treatment in the presence of activated carbon, which is to be employed in the second step or thereafter, under the following conditions.
(a) Treating under aerobic conditions.
(b) Treating under cometabolism conditions.

The "aerobic condition" as used herein can be established through the aeration of the solution in the biological treatment tank with, for example, air. The dissolved oxygen concentration in the tank preferably ranges from 0.5 to 7 mg/l, and more preferably from 3 to 7 mg/l.

The term "cometabolism" means a biological degradation whereby a substance is degraded at an elevated rate in the coexistence of another organic material compared with the case where it is degraded as the only one carbon source for microorganisms.

Cometabolism is described in detail in "Biseibutsu ni yoru Yuki Kagobutsu no Henkan (Microbial Conversion of Organic Compounds)" G. K. Skryabin et al., supervisor of translation project: S. Fukui (Gakkai Shuppan Center) p. 126 - 136. All the substances do not generate cometabalism.

The present inventors have found out that the hardly degradable components in an aerobically treated solution of the photoprocessing waste solution to be degraded are degraded at a higher rate in the coexistence of a material which can be degraded by microorganisms, i.e., under cometabolism conditions, compared with a case where the hardly degradable components exist exclusively. They have further found out that, under the cometabolism conditions, a higher degradation efficiency can be achieved in an aerobic state than the one in an anaerobic state (i.e., no aeration with air, etc.).

To perform the above-described biological treatment under the cometabolism conditions, it is preferable to newly add a material which can be degraded by a microorganism to the treatment system.

As such a material to be used in the present invention, any one may be used so long as it can be biologically degraded. Examples thereof include sugars such as glucose and xylose; sugar alcohols such as sorbitol and mannitol; lower fatty acids such as acetic acid and citric acid; alcohols such as methanol, ethanol, propanol and benzyl alcohol; glycols such as triethylene glycol and diethylene glycol; hydroquinone or its derivatives; aldehydes such as glutaraldehyde and benzaldehyde; sulfonic acids such as p-toluenesulfonic acid and 5-sulfosalicylic acid; monoethanolamine, diethanolamine or N-alkyl derivatives thereof; amino acids; peptones; meat extract; yeast extract; corn steep liquor; and a waste solution which contains highly degradable components (for example, sewage).

When the content of carbon in the waste solution to be treated is referred to as 1, such a material is preferably added to give a carbon content therein of from 0.01 to 10, still preferably from 0.1 to 3.

Under the cometabolism conditions, the treatment may be performed either aerobically or anaerobically. However, an aerobic treatment is preferable.

The present inventors have found out that organic aminocarboxylic acids (for example, EDTA) are degraded in the presence of not any microorganism but an inorganic material such as activated carbon. In the process for making a waste solution harmless according to the present invention, such a degradition treatment by using exclusively activated carbon may be used together with the above-mentioned biological treatments. It is preferable that metal (iron, calcium, magnesium, manganese, etc.) complex salts of organic aminocarboxylic acids are converted into salts of sodium, potassium, etc. prior to the treatment.

The present inventors have further found out that when the hardly degradable components of an aerobically treated photoprocessing waste solution are degraded by a biological treatment in the presence of activated carbon, the degradition behaviors differ depending on the activated carbon employed.

Namely, they have found out that an activated carbon made from pitch (for example, BAC manufactured by Kureha Chemical Industry Co., Ltd.) is highly suitable for the degradition of chelating agents such as EDTA, while activated carbons made from coal or coconut shell (for example, F400, BPL, CAL, etc. made from coal, PCB, etc. made from coconut shell, each manufactured by TOYO CALGON) are highly suitable for the degradition of the hardly degradable components other than chelating agents.

To maintain a performance of efficiently degrading both of these components, it is therefore preferable that an activated carbon made from pitch is first employed for degrading chelating agents followed by the use of at least one activated carbon made from coal or coconut shell.

For example, BAC (manufactured by Kureha Chemical Industry Co., Ltd.) and F400 (manufactured by TOYO CALGON) may be mixed and used in a single treatment tank. Alternatively, these activated carbons are fed into separate tanks and the tank containing CALGON F400 is provided in the upstream of the treatment system, while the one containing Kureha BAC is provided in the downstream.

The biological treatment in the presence of activated carbon is performed preferably at a temperature of from 10 to 40°C, still preferably from 20 to 35°C. It is preferable to continue the treatment for 1 to 6 days, more preferably for 2 to 4 days. The treatment load (expressed in COD_{Mn} load) preferably ranges from 0.07 to 0.5 kg/(m³·day), more preferably from 0.1 to 0.2 kg/(m³·day). The pH value for the treatment preferably ranges from 3 to 8, still preferably from 5 to 7.

In the case of the shortage of nutritive salts such as nitrogen and phosphorus, it is required to add these substances either directly to a biological treatment tank or to the treated solution before introducing into the biological treatment tank. Nitrogen may be in any form so long as microorganisms can utilize the same. For example, (NH₄)₂SO₄ and urea are usable therefor. Similarly, phosphorus may be in any form so long as microorganisms can utilize the same. For example, K₂HPO₄, KH₂PO₄ and Na₂HPO₄ are usable therefor. The nitrogen concentration preferably ranges from 1 to 5 % by weight, more preferably from 2 to 3 % by weight, of BOD, while the phosphorus concentration preferably ranges from 0.5 to 3 % by weight, more preferably from 2 to 3 % by weight, of BOD.

It is usually unnecessary to add phosphorus in the second step or thereafter, since phosphorus has been already added before the first treatment step. Also, it is usually unnecessary to add any nitrogen component, since a photoprocessing waste solution usually contains a large amount of ammonia.

Examples of the microorganism to be used in the biological treatment in the presence of activated carbon according to the present invention include publicly known bacteria employed in general such as *Zoogloea*, *Sphaerotilus*, *Pseudomonas*, *Bacillus*, *Alcaligenes*, *Achromobacter*, *Flavobacterium* and *Thiobacillus*.

In order to perform the biological treatment in the presence of activated carbon, it is preferable to inoculate a microorganism. As the inoculation source, a microbial flock or a biofilm in an existing biological treatment equipment may be used. However, it is preferable to use one which has been acclimated in the treated solution from the first step (i.e., the photoprocessing waste solution which has been biologically treated to thereby decompose highly degradable components and which contains hardly degradable components) for a long period (1 to 10 months, preferably 2 to 6 months). It is further preferable to use one which has been acclimated in the presence of activated carbon for 1 to 10 months, still preferably 2 to 6 months.

It was not known that hardly degradable components remaining in the photoprocessing waste solution which has been biologically treated in the first step could be degraded by the biological treatment in the presence of activated carbon till such an acclimation for the long period was tried. The effect of the acclimation can not be expected from the beginning and the possibility of degradation by such a biological treatment can not be easily known.

It is also possible to inoculate a bacteria capable of degrading organic aminocarboxylic acids to thereby elevate the degradition efficiency of the organic aminocarboxylic acids. Examples of such a bacterium include *Pseudomonas editabidus* and *Bacillus editabidus*. These bacteria capable of degrading organic aminocarboxylic acids are disclosed in JP-A-6-261771, JP-A-6-296990 and JP-A-6-335384, though the bacterium capable of degrading organic aminocarboxylic acids to be used herein is not restricted thereto.

Further, a step of nitrification and denitrification may be employed as the second step or thereafter in the treatment system of the present invention.

Now the nitrification and denitrification will be described.

When the waste solution contains inorganic nitrogen compounds such as nitrous acid or nitric acid, the nitrogen can be biologically removed. Nitrous acid and nitric acid may be removed in the form of nitrogen by denitrifying bacteria under anaerobic conditions. In the case of ammonia, nitrification is first required. The nitrification involves conversion into nitrite and nitrate. The conversion into nitrite is carried out by *Nitrosomonas*, while the conversion into nitrate is carried out by *Nitrobactor*. *Nitrosomonas* and *Nitrobactor* are called nitrifying bacteria in general. Since these nitrifying bacteria have a low growth rate, it is required to prevent the leakage of the nitrifying bacteria in order to elevate the cell concentration thereof in the treatment tank. Means therefor include prolonging the sludge retention time (SRT) in the activated sludge method, adhering the nitrifying bacteria onto a carrier to thereby immobilize the same, or using pellets having the nitrifying bacteria entrapped and immobilized therein to thereby elevate the nitrifying bacteria concentration in the treatment tank.

Growth factors for the nitrifying bacteria include water temperature, pH value, dissolved oxygen concentration and BOD load. Among all, pH value is a particularly important factor and preferably ranges from 6.5 to 8.5.

To denitrify nitric acid and nitrous acid by denitrifying bacteria under anaerobic conditions, it is necessary to use an organic compound (organic carbon source) serving as a hydrogen donor. As the organic carbon source, organic matters contained in the influent (waste water to be treated) may be used. In the case of the shortage of the organic carbon source, methanol, acetic acid, etc. may be added. From a practical viewpoint, it is required to add, for example, methanol in an amount of about thrice as much as 1 Kg of nitrogen in the nitrate form (NO₃-N) in terms of BOD.

It is also possible to use a sulfur denitrifying bacterium such as *Thiobacillus denitrificans* as the denitrifying bacterium. The sulfur denitrifying bacterium reduces, as an electron receptor, a nitrate or a nitrite into nitrogen gas, and also oxidizes, as an electron donor, sulfur in the elemental form or thiosulfuric acid into a sulfate.

Since sulfur and a thiosulfate are thus usable in the denitrification, it is also possible to economically perform the denitrification without using any organic material such as methanol.

Specific procedures of these biological treatments and meaning of technical terms employed therein are described in "Seibutugakuteki Mizu Shori Gijutsu to Sochi (Technology and Equipment for Biological Treatment of Water)", ed. by Kagaku Kogaku Kyokai (Association of Chemical Technology), Baifukan; "Kankyo Joka no tame no Biseibutsugaku (Microbiology for Environmental Sanitation)", ed. by R. Sudo, Kodansha Scientific; "Haisui Shori Purosesu, Sekkei Riron to Jikken-ho (Waste Water Treatment Process: Theory in Design and Experimental Method)", W.W. Eckenfelder, D.L. Ford, Gihodo; etc.

The nitrification can be effected either before or after the biological treatment in the presence of activated carbon.

Both of the solution obtained by biologically treating a photoprocessing waste solution under aerobic conditions and a solution obtained by further biologically treating said solution in the presence of activated carbon can be quickly nitrified in a biological treatment tank containing a sufficient amount of nitrifying bacteria.

The nitrification step may be performed with the use of, for example, microbial suspension methods such as activated sludge method, three-phase fluidized bed method and sponge-carrier method; biofilm methods such as biological filtration, submerged bed method and fluidized bed method; and entrapment immobilization. Among these methods, the biofilm methods, the three-phase fluidized bed method and the entrapment immobilization are preferable. Among the biofilm methods, the submerged bed method, the fluidized bed method and the biological filtration are preferable.

As a carrier in the biofilm methods, use can be made of, for example, porous ceramics, activated carbon, bone black, charcoal, sponges, chitosan, string carriers, plastics, honeycomb carriers, liquid carriers, net carriers, anthracite, gravel, sand, pumice and diatomaceous earth either singly or in the form of a combination.

In the biological treatment in the presence of activated carbon, the degradition of the hardly degradable components and the nitrification can be carried out simultaneously by regulating the pH value in the treatment tank to 6.5 to 7.5. It is preferable to effect this regulation, since the load in the nitrification step following the biological treatment in the presence of activated carbon can be relieved thereby.

For the entrapment immobilization, any method may be employed so long as a microorganism can be entrapped while maintaining its microbial activity and sustaining a high physical strength so as to endure prolonged use in the treatment tank. Examples of such a method include acrylamide method, agar-acrylamide method, polyoinyl alcohol (PVA)-boric acid method, PVA-freezing, photosetting resin method, synthetic acrylic polymer resin method, sodium polyacrylate method, sodium alginate method and K-carrageenan method.

For the entrapment immobilization of nitrifying bacteria, it is preferable to use the acrylamide method, etc.

These immobilization techniques are described in greater detail in the literatures as cited above. These treatments may be performed either continuously or batchwise.

It is usually unnecessary to add nutritive salts such as nitrogen and phosphorus. In the case of the shortage of, in particular, phosphorus, however, it should be added.

No dilution is needed in the step of the nitrification. This treatment is performed preferably at a temperature of from 20 to 35°C, still preferably from 30 to 35°C, and at a pH value of preferably from 6.5 to 8.5, still preferably from 7.0 to 8.0. Although the treatment time varies depending on the ammonia concentration in the solution to be treated and the target level of the treatment, the treatment is preferably continued for 1 to 5 days more preferably for 1.5 to 3 days. The treatment load (expressed in nitrogen load) preferably ranges from 0.2 to 0.7 kg-N/m³·day).

The denitrification step following the nitrification may be carried out either immediately after the completion of the nitrification or after effecting some other treatments. Further, the denitrification step may be carried out before the nitrification step, and the solution processed in the nitrification step may be returned to the denitrification step.

The denitrification, which is performed in an anaerobic atmosphere (i.e., without aeration), smoothly proceeds. In this denitrification step, organic compounds such as methanol, propanol or acetic acids, biological treatment sludge, thiosulfate, etc. can be employed as a hydrogen donor.

In the case of a photoprocessing waste solution, the excessive sludge formed in the first step can be used in the denitrification to thereby decrease the amount of an organic compound (for example, methanol) usually employed for the denitrification, which largely contributes to the reduction of the cost of chemicals employed for the denitrification. In this case, it is preferable that the denitrification step is provided after the separation of the sludge formed in the first step by precipitation and the treated solution obtained from the nitrification step is returned to this denitrification step. For example, the denitrification tank is provided with a connecting part, through which the sludge concentrated in the sludge precipitation tank of the first step can be transported in and out, and the solution treated in the (later) nitrification step is returned into the denitrification tank and denitrified therein.

It is preferable that the amount of the treated solution to be returned from the nitrification step is from 1 to 4 times (still preferably from 2 to 3 times) larger than the amount of the solution flowing from the first step into the denitrification step.

An excessively large amount of the solution returned to the denitrification step causes some undesirable results, for example, an elevated operation cost of the feed-back pump and a decrease in the denitrification efficiency due to the dissolved oxygen transferred from the nitrification step to the denitrification tank.

The denitrification step may be performed with the use of, for example, microbial suspension methods such as activated sludge method, three-phase fluidized bed method and sponge-carrier method; biofilm methods such as biological filtration, submerged bed method and fluidized bed method; and entrapment immobilization. Among these methods, the microbial suspension methods and the biofilm methods may be cited as preferable ones. Among the biofilm methods, the submerged bed method, the biological filtration with a granular carrier, the fluidized bed method, etc. may be cited as preferable ones. It is also possible to use activated carbon in the denitrification step to thereby simultaneously perform the denitrification and the degradation of the hardly degradable components in the photoprocessing waste solution which has been subjected to the aerobic biological treatment. Since the reaction system contains the organic compound added as a hydrogen donor for the denitrification, the hardly degradable components can be degraded under preferable conditions, i.e., cometabolism and anaerobic conditions.

It is preferable to perform an aerobic treatment after the denitrification to thereby eliminate the COD components remaining in the denitrification step. Examples of the aerobic biological treatment include microbial suspension methods such as activated sludge method, three-phase fluidized bed method and sponge-carrier method; and biofilm methods such as biological filtration, submerged bed method and fluidized bed method. Among these method, the biofilm methods may be cited as preferable ones.

When the denitrification is performed simultaneously with the degradation of the hardly degradable components in the photoprocessing waste solution, which has been subjected to the aerobic biological treatment, with the use of activated carbon in the denitrification step, it is preferable to use activated carbon in the aerobic treatment following the denitrification step so as to sufficiently degrade the hardly degradable components.

In the treatment process of the present invention, the steps following the second biological treatment (for example, steps of biological nitrification and denitrification) may be replaced with a step of ammonia elimination due to ammonia stripping.

After the completion of the treatments as described above, it is preferable to eliminate iron components and phosphorus, if necessary.

The iron components are mostly eliminated as insoluble matters together with the excessive sludge in the step of the biological treatment in the presence of activated carbon for the degradation of Fe-EDTA in the photoprocessing waste solution.

When it is necessary to further eliminate iron, the solution under treatment is made alkaline followed by the elimination of the iron thus insolubilized. Alternatively, complex salts of iron ion with phosphate and/or other inorganic salts or acids are formed at a pH value of 4 to 7.5 and eliminated by precipitation. These procedures are described in JP-A-4-235787, etc.

To eliminate phosphorus, it is preferable to use physicochemical methods, for example, lime coagulation, aluminum coagulation, iron coagulation, crystallization with the use of phosphorous ore, bone ash, magnesia clinker, apatite, etc. as seed crystals, adsorption with the use of active alumina, chelate resin, etc., a method with the use of contact with iron, and ion exchange.

These methods are described in detail in "Datsuchitsu Datsurin Gijutsu to Koueiyouka (Denitrifying and Dephosphorylating Techniques and Eutrophication)" (I.P.C.).

The process for treating a photoprocessing waste solution as described above can be applied as such to other waste solutions containing organic aminocarboxylic acids.

Examples of the organic aminocarboxylic acids to which the process is applicable include free organic aminocarboxylic acids and salts thereof (for example, alkali metal salts such as sodium and potassium salts, ammonium salts, alkanolamine salts) and metal (for example, iron, calcium, magnesium, cobalt, manganese) complexes thereof.

Typical examples of the organic aminocarboxylic acids are as follows, though the present invention is not restricted thereto.
- B-1:: ethylenediaminetetraacetic acid (EDTA)
- B-2:: diethylenetriaminepentaacetic acid
- B-3:: 1,2-diaminopropanetetraacetic acid
- B-4:: 1,3-diaminopropanetetraacetic acid (PDTA)
- B-5:: butylenediaminetetraacetic acid (BDTA)
- B-6:: ethyletherdiaminetetraacetic acid
- B-7:: glycoletherdiaminetetraacetic acid
- B-8:: ethylenediaminetetrapropionic acid
- B-9:: ethylenediaminediaceticdipropionic acid
- B-10:: ethylenediaminediacetic acid
- B-11:: ethylenediaminedipropionic acid
- B-12:: ethylenediamine-N-(β-hydroxyethyl)-N,N',N'-triacetic acid
- B-13:: ethylenediaminedi-o-hydroxyphenylacetic acid
- B-14:: hydroxyethylethylenediaminetriacetic acid
- B-15:: 1,2-diaminocyclohexanetetraacetic acid
- B-16:: m-phenylenediaminetetraacetic acid
- B-17:: m-xylylenediaminetetraacetic acid
- B-18:: triethylenetetraminehexaacetic acid
- B-19:: nitrilotriacetic acid
- B-20:: nitrilotripropionic acid
- B-21:: nitrilodiaceticmonopropionic acid
- B-22:: nitrilodiaceticmonohydroxypropionic acid
- B-23:: nitrilomonoaceticdipropionic acid
- B-24:: nitrilomonoaceticdihydroxypropionic acid
- B-25:: N-(2-acetamido)iminodiacetic acid (ADA)
- B-26:: methyliminodiacetic acid
- B-27:: iminodiacetic acid
- B-28:: hydroxyethyliminodiacetic acid
- B-29:: diethylenethioetherdiaminetetraacetic acid
- B-30:: trans-1,2-cyclohexanediaminetetraacetic acid
- B-31:: ethylenediamine-N,N'-di(2-acetamido)diacetic acid
- B-32:: trans-1,2-cyclohexanediamine-N,N'-di(2-acetamido)-diacetic acid
- B-33:: o-xylenediaminetetraacetic acid
- B-34:: N-(2-carboxyphenyl)iminodiacetic acid
- B-35:: ethylenediamine-N-(2-carboxyphenyl)-N,N',N'-triacetic acid
- B-36:: 1,3-propylenediamine-N-(2-carboxyphenyl)-N,N',N'-triacetic acid
- B-37:: monopropioniciminodiacetic acid
- B-38:: monocarboxyliciminodipropionic acid
- B-39:: ethylenediamine-N,N'-disuccinic acid
- B-40:: 1,3-propylenediamine-N,N'-disuccinic acid
- B-41:: ethylenediamine-N,N'-dimalonic acid
- B-42:: 1,3-propylenediamine-N,N'-dimalonic acid
- B-43:: ethylenediamine-N,N',N'-triacetic-N-monopropionic acid
- B-44:: 1,3-propylenediamine-N,N',N' -triacetic-N-monopropionic acid
- B-45:: 2-{[1-(carboxyethyl)carboxymethylamino]ethyl}carboxymethylaminobenzoic acid
- B-46:: 2-(1-carboxy-2-phenylethylamino)succinic acid
- B-47:: 2-[1-carboxy-2-(1H-imidazol-4-yl-ethylaminophenylethylamino]succinic acid
- B-48:: 2-[(carboxyphenylmethyl)amino]succinic acid
- B-49:: 2-(1-carboxyethylamino)succinic acid
- B-50:: 2-(bis-carboxymethylamino)propionic acid.

Now typical flows of the treatment of a waste solution in accordance with the present invention will be given.

In these flow charts, the term "biological activated carbon treatment" means a biological treatment in the presence of activated carbon and the term "denitrification" sometimes involves an aerobic treatment following denitrification.

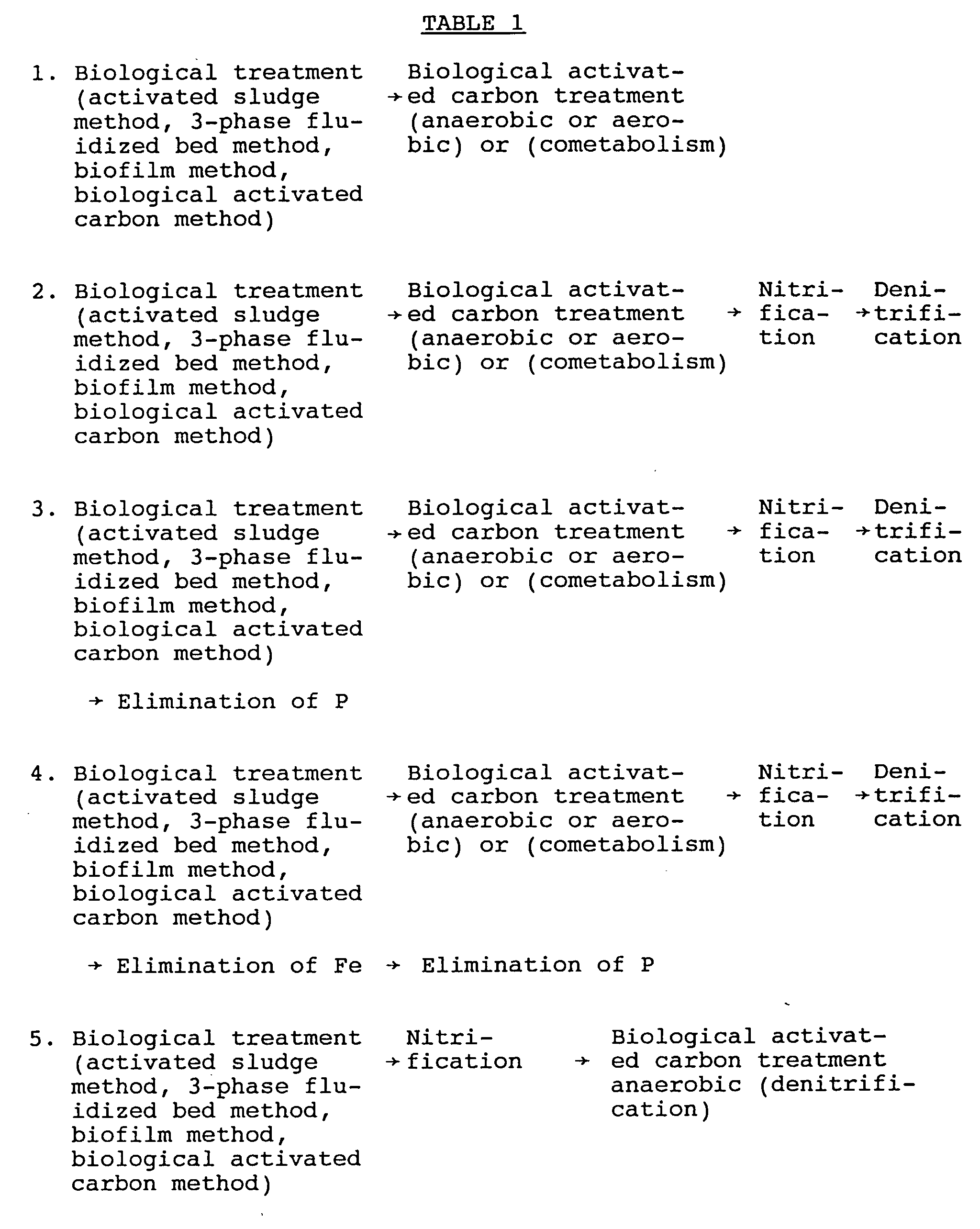

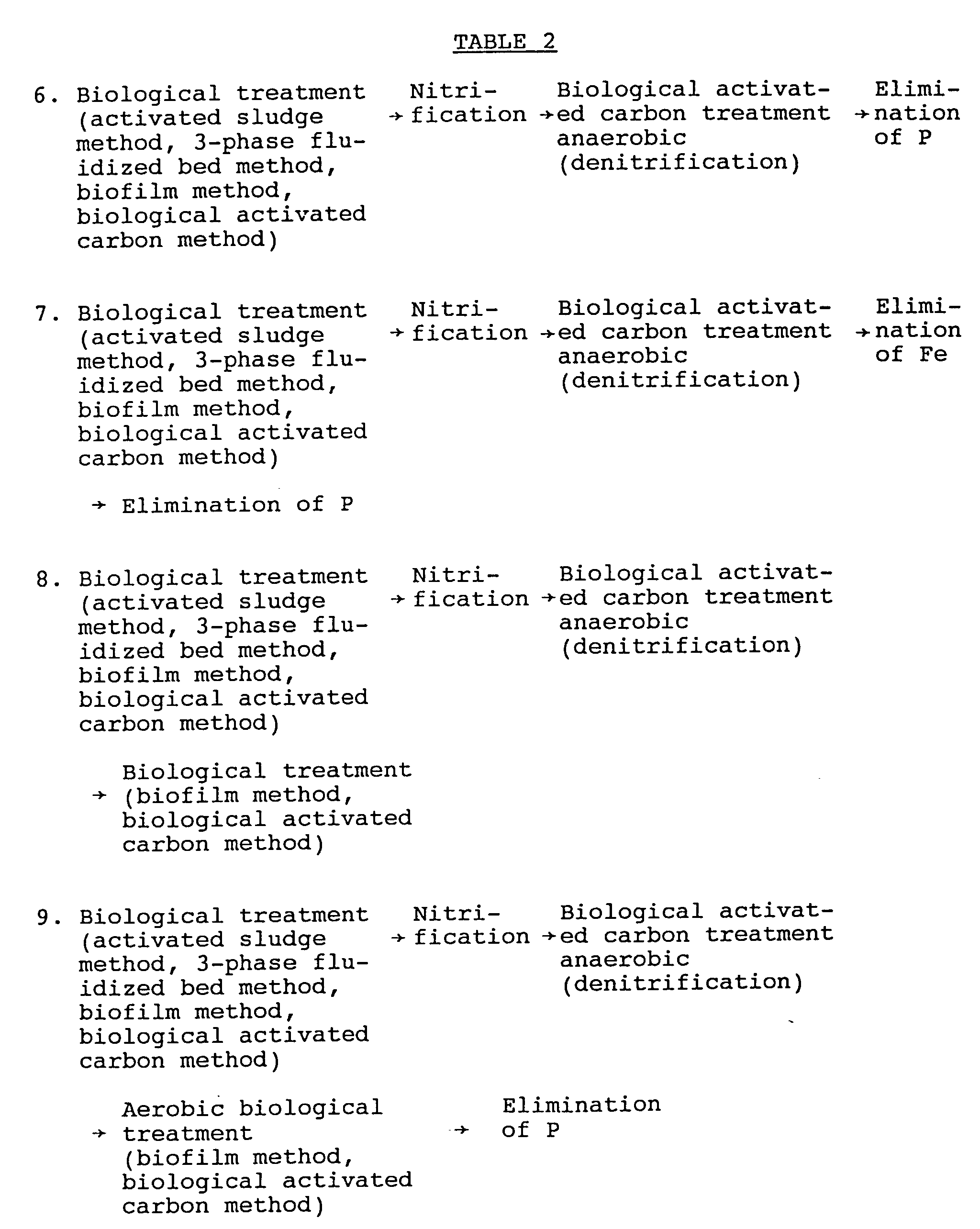

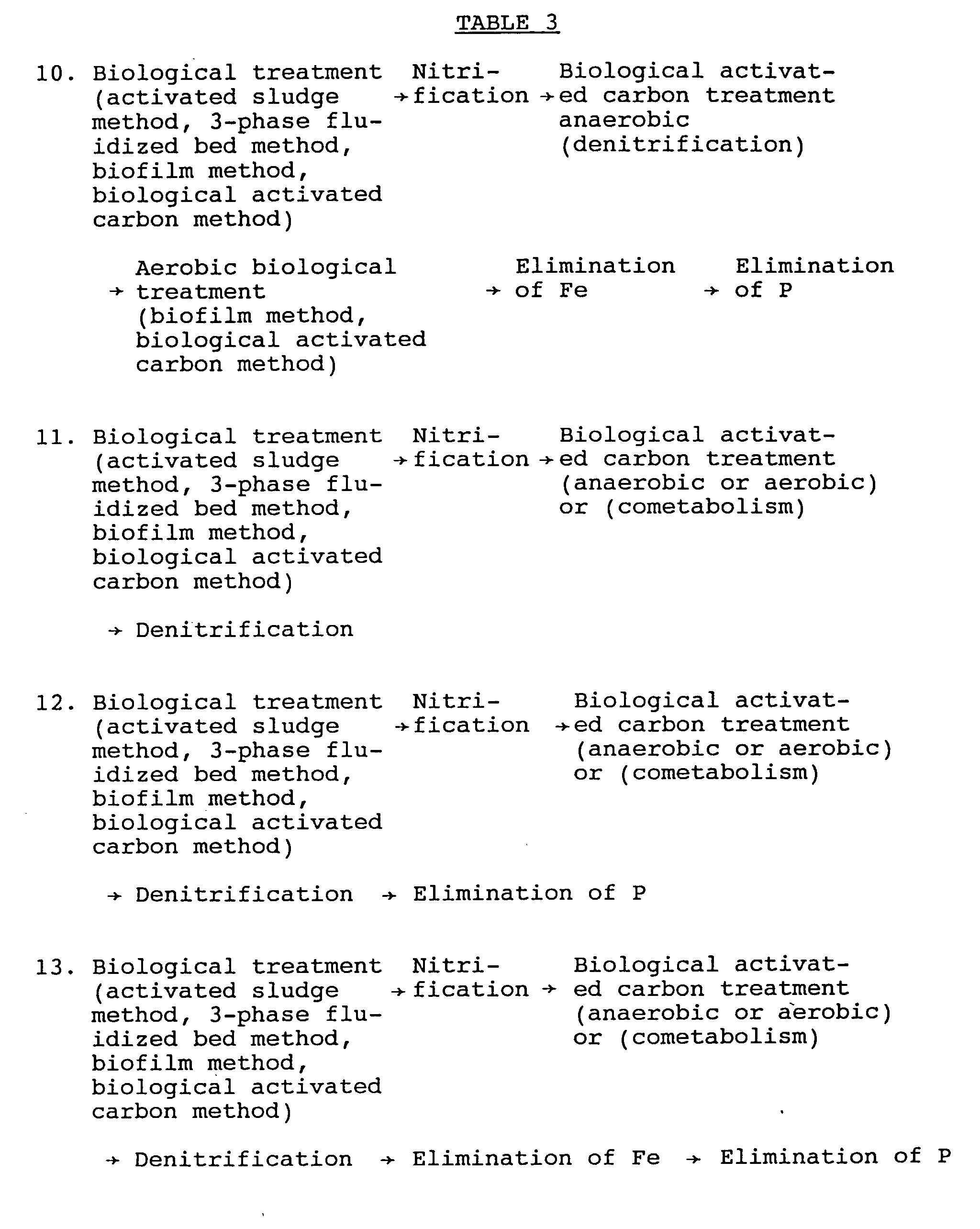

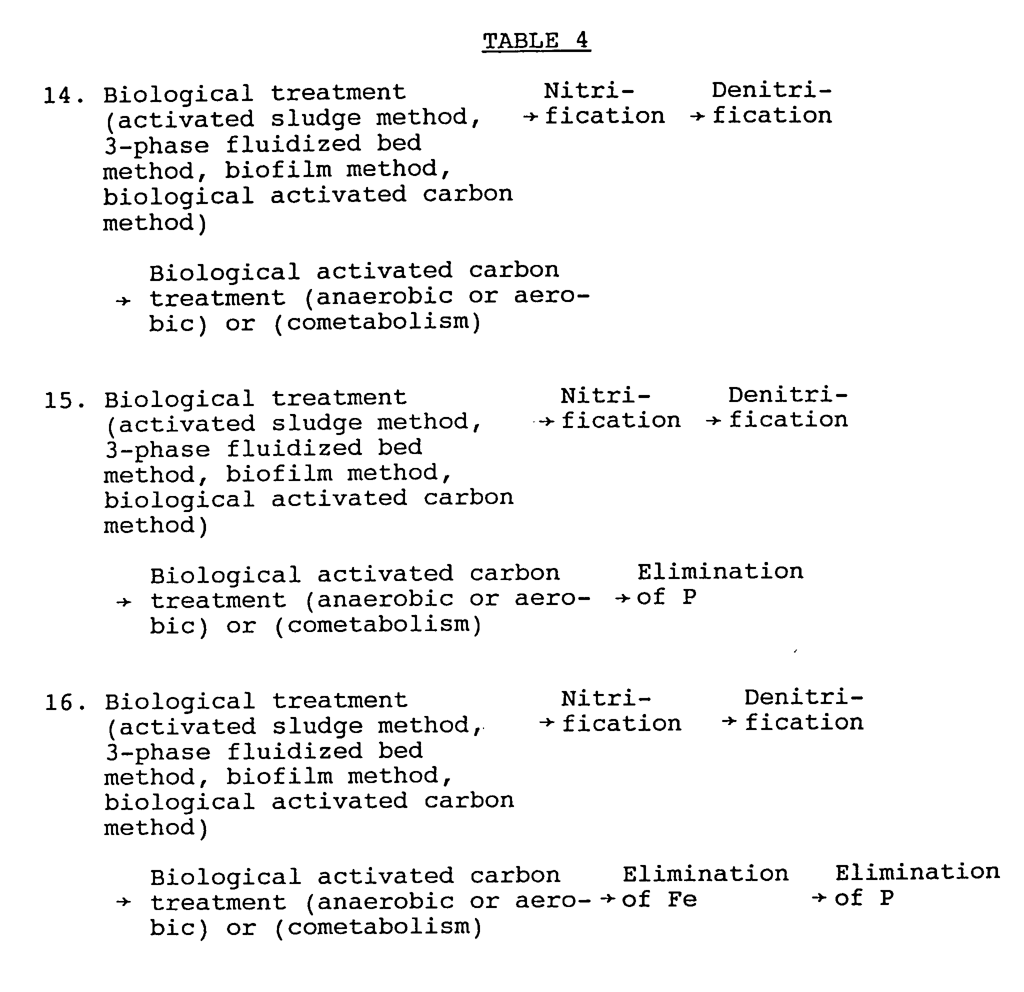

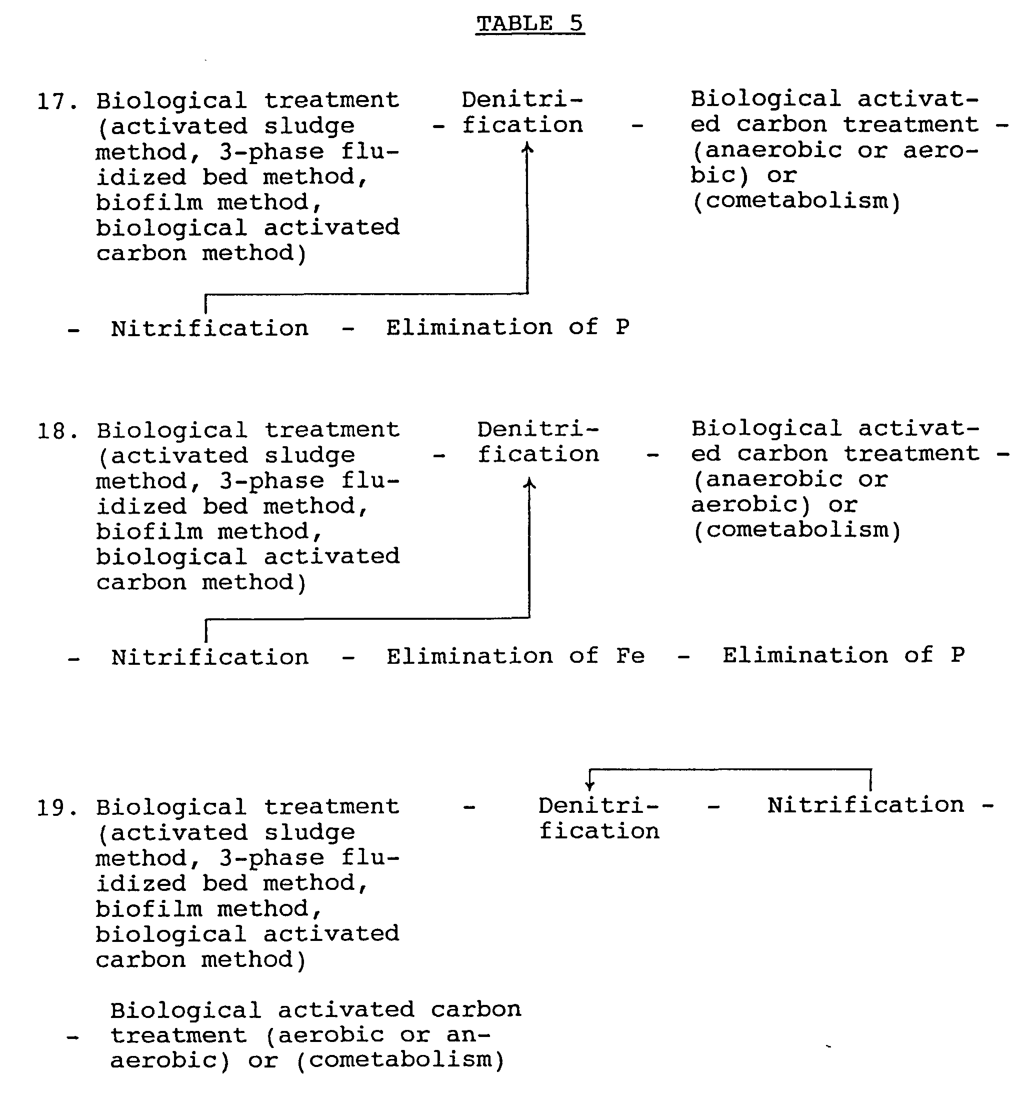

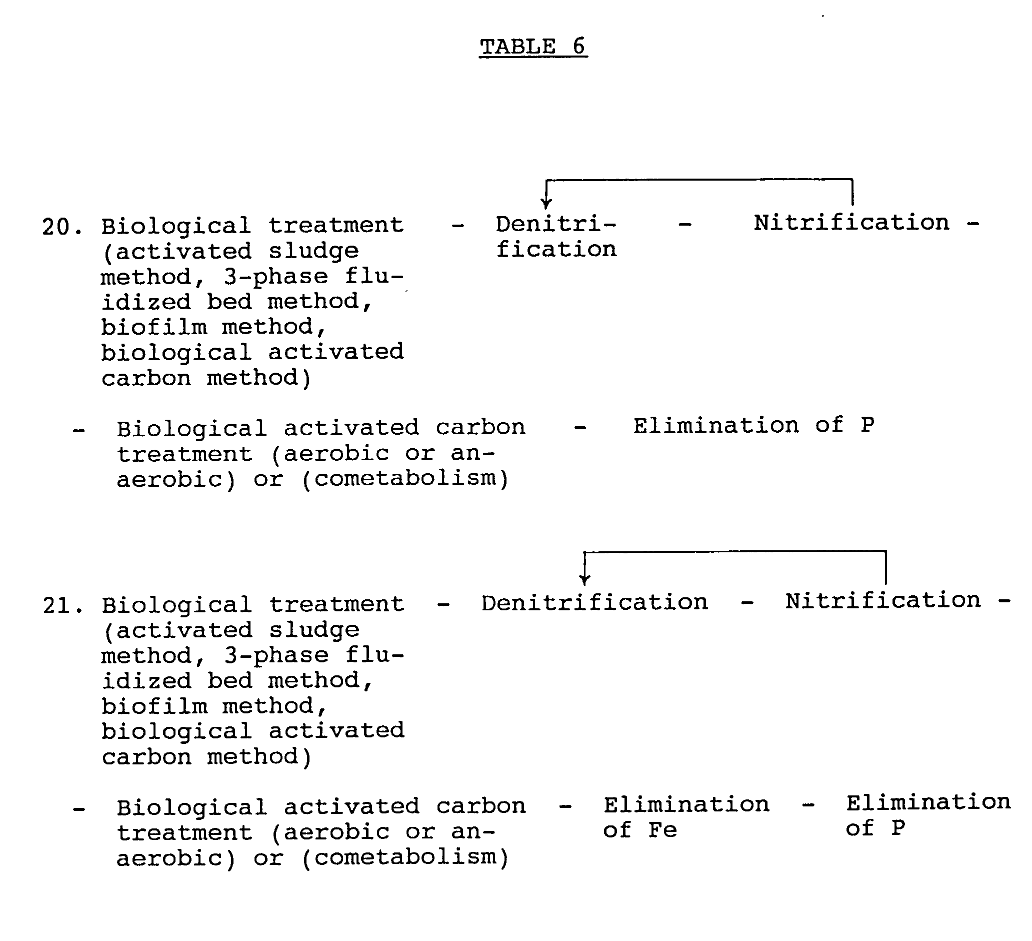

Among the above flows, flows No. 2 and No. 3 and No. 17 are preferable ones.

To further illustrate the present invention in greater detail, and not by way of limitation, the following Examples will be given.

### EXAMPLE 1

### A. Degradation of hardly degradable components in aerobically treated photoprocessing waste solution with activated carbon

A silver-recovery system waste solution (a mixture comprising waste solutions from fixing solution of color photograph processing CN-16, a mixture of bleaching solution of CN-16Q with fixing solution, bleach-fixing solution of CP-20, bleach-fixing solution of CP-23, fixing solutions of black-and-white photograph processing, Fuji F and GR-F1 and water at a ratio of 4 : 1 : 3 : 2 : 7 : 3 : 2, from which silver had been recovered) was mixed with a development solution-series waste solution (a mixture comprising waste solutions from development solutions of color photograph process development solutions CN-16, CN-16Q, CP-20 and CP-23, waste solutions from black-and-white photograph process development solutions RD3 and GR-D1 and water at a ratio of 4 : 1 : 3 : 2 : 7 : 3 : 2) at a ratio by volume of 1 : 1. The resulting solution had a high inorganic salt concentration of 12 weight/volume %, which made it unsuitable for biological treatments. Thus it was diluted 10-fold with tap water to thereby give an inorganic salt concentration of 1.2 weight/volume %. To this solution was added phosphorus in the form of dipotassium monohydrogen phosphate in an amount corresponding to about 2.5 % by weight of COD_{Mn} value (about 4700 ppm). Further, 10 ppm of calcium ions and 2 ppm of magnesium ions were added thereto. The waste solution thus prepared had a pH value of 8.5.

The terms CN-16, CN-16Q, CP-20, CP-23, Fuji F, GR-F1, RD3 and GR-D1 mean each a trade name of a processing solution manufactured by Fuji Photo Film Co., Ltd.

The waste solution prepared above was subjected to biological treatments in the following steps.

### Activated sludge treatment:

First, the waste solution was continuously treated with activated sludge containing sulfur oxidizing bacteria (MLSS 4500 ppm). The activated sludge containing sulfur oxidizing bacteria employed herein was one which had been preincubated for adaption for 1 month while continuously feeding the silver-recovery system waste solution diluted 10-fold (COD_{Mn}: about 4500 ppm) at a residence time of 2 days.

The sulfuric acid thus formed was neutralized with a 10 % aqueous solution of sodium hydroxide to thereby maintain the pH value in the aeration tank to higher than 6.6. The pH value was regulated by using a pH controller (Model FC-10, manufactured by Tokyo Rika).

Thus, a solution (COD_{Mn:} 830 ppm, total organic carbon (TOC): 330 ppm, NH₄ concentration: 1000 ppm (NH₄-N 780 ppm), Fe-EDTA concentration: 350 ppm, color: 3800) was obtained. The treatment was performed at room temperature and the same will apply hereinafter.

### Biological activated carbon treatment:

Microorganisms, which had been acclimated in the following manner, were inoculated into a mixture of 10 g of granular activated carbon (BAC, manufactured by Kureha Chemical Industry, Co., Ltd.), which had been adsorption-equilibrated with the aerobically treated photoprocessing waste solution, with 130 ml of the solution, as a solution to be treated, contained in a 200 ml Erlenmeyer flask.

### <Acclimation of inoculated microorganisms>

The photoprocessing waste solution was continuously treated for 6 months with sludge in the activated sludge processing plant in Ashigara Factory, Fuji Photo Film Co., Ltd. under aerobic conditions. Further, the sludge in the activated sludge processing tank was inoculated into a fluidized bed packed with granular activated carbon and acclimated therein for adaption for 5 months through the treatment of the aerobically treated activated sludge solution of the photoprocessing waste solution.

The aerobic treatment was performed by shaking the Erlenmeyer flask on a rotary shaker (125 rpm) at 25°C in the dark. The anaerobic treatment was performed by using the solution to be treated which had been saturated with nitrogen gas, continuously feeding nitrogen gas into the space on the solution surface in the Erlenmeyer flask to thereby keep an anaerobic state, and shaking the flask in the same manner as the one employed in the aerobic treatment. In each of the aerobic and anaerobic treatments, a 20 ml portion of the solution in the flask was sampled at intervals of 3.5 days and 20 ml of the fresh solution to be treated was added.

The TOC and Fe-EDTA levels in the collected samples were monitored by determining by ion chromatography.
(A-1) By using the aerobically treated photoprocessing waste solution as the solution to be treated, the above-mentioned aerobic treatment was performed in the presence of activated carbon.
(A-2) By using the aerobically treated photoprocessing waste solution as the solution to be treated, the above-mentioned anaerobic treatment was performed in the presence of activated carbon.

In each of (A-1) and (A-2), the TOC treatment ratio and the Fe-EDTA degradation ratio became almost constant after 10 days.

Table 7 summarizes the Fe-EDTA degradation ratios of (A-1) and (A-2) after 28 days.

**TABLE 7**

| Degradation of hardly degradable components in aerobically treated photoprocessing waste solution treated with biological activated carbon (shaking, 25°C, 28 days, replaced in 20 ml portions per 3.5 days) | | | |
|---|---|---|---|
| | | Fe-EDTA degradation ratio (%) | Fe-1,3-PDTA degradation ratio (%) |
| A-1 | aerobic | 58 | 83 |
| A-2 | anaerobic | 45 | 62 |

As Table 7 shows, the Fe-EDTA degradation ratio of the aerobic one (A-1) is higher than that of the anaerobic one (A-2).

### B. Degradation of TOC and Fe-EDTA (2.5 ℓ fluidized bed of activated carbon)

### (B-1) Aerobic treatment:

Use was made of a fluidized bed having a granular activated carbon (BAC manufactured by Kureha Chemical Industry Co., Ltd.), the bulk volume of which amounted to 40 % of the capacity of the treating tank, as a carrier. The inside of the treating tank was maintained in an aerobic state by aerating the inside of the side pipe for circulating the solution.

The activated carbon was allowed to adsorb the activated sludge-treated solution components of the photoprocessing waste solution. When the equilibrated adsorption concentration (TOC) reached 50 ppm, the same microorganism as the one employed in A was inoculated.

The treatment was performed by the batch-wise method (each cycle having 5 days) and the amount of the treated solution released from the treating tank was regulated to 80 % of the whole solution per cycle.

### (B-2) Anaerobic treatment:

The procedure of the above (B-1) was repeated but effecting no aeration.

In both of (B-1) and (B-2), TOCs and Fe-EDTA concentrations of the released solutions were determined.

After 30 days, the TOC of the released solution of (B-1) was 12 ppm, while that of (B-2) was 22 ppm. Thus, the aerobic treatment established a higher TOC processing ratio than the anaerobic treatment did. On the other hand, the Fe-EDTA concentration of (B-1) was 0.5 ppm and that of (B-2) was 1 ppm. Namely, both of these treatment achieved good results, though the aerobic treatment was somewhat superior to the anaerobic one.

### C. Degradation of Fe-1,3-PDTA

The aerobically treated photoprocessing waste solution contains 60 ppm of Fe-1,3-PDTA.

Table 7 summarizes the Fe-1,3-PDTA degradation ratios of (A-1) and (A-2) after 28 days.

As Table 7 shows, Fe-1,3-PDTA is degraded better than Fe-EDTA, and the Fe-1,3-PDTA degradation ratio of the aerobic one (A-1) is higher than that of the anaerobic one (A-2).

### EXAMPLE 2

### (Making photoprocessing waste solution harmless by effecting a biological treatment and another biological treatment in the presence of activated carbon followed by nitrification and denitrification)

The same photoprocessing waste solution as the one used in Example 1 was biologically treated in the following steps.

### Activated sludge treatment:

The procedure of Example 1 was repeated.

### Biological activated carbon treatment:

The processed solution obtained from the above step was treated by using an aerobic fluidized bed packed with granular activated carbon (BAC, manufactured by Kureha Chemical Industry, Co., Ltd.) as carrier batchwise (1 cycle per 3 days). The discharge of the treated solution from the treatment tank was regulated to 80 % of the whole solution per cycle. The TOC of the treated solution was about 30 ppm while the color thereof was 150. When analyzed by ion chromatography, the treated solution contained little Fe-EDTA.

### Nitrification:

Ammonium ions (about 1000 ppm, NH₄-N 780 ppm) in the waste solution treated in the above steps were converted into nitrate ions with the use of a nitrification tank wherein acrylamide gel pellets having nitrifying bacterial entrapped and immobilized thereon were suspended.

This acrylamide gel was prepared in accordance with the method described in "Biseibutsu Koteika-ho ni yoru Haisui Shori (Processing of Waste Water by Microbial Immobilization Method)", ed. by R. Sudo, Sangyo-Yosui Chosa kai (Industrial Water Research Association), p. 196 - 199. The acrylamide gel molded into about 3 mm-cubes was added in an amount of about 10 % of the volume of the aeration tank and suspended therein.

Nitrification was performed batchwise (1 cycle per 2 days) while regulating the pH value of the contents of the nitrification tank to about 7.5. The discharge of the treated solution from the treatment tank was regulated to about 70 % of the whole solution per cycle.

Denitrification: Nitrate ions (about 3400 ppm, NO₃-N 770 ppm) in the solution thus obtained were denitrified by passing through a fluidized bed biological denitrification column packed with porous ceramic grains as a carrier. As an organic compound required in the denitrification, methanol was added in such an amount as to give TOC of 1530 ppm (TOC/NO₃-N: 2/1). Then the denitrified solution was passed through, for example, a biofilter column maintained in an aerobic state to thereby eliminate the residual organic matters. The residence times in the denitrification column and the biofilter were respectively 12 hours and 4 hours. The solution thus obtained had COD_{Mn} of 10 ppm and total nitrogen (T-N) of 5 ppm.

### EXAMPLE 3

### (Making photoprocessing waste solution harmless by effecting a biological treatment, nitrification and then biological treatments in the presence of activated carbon)

The same photoprocessing waste solution as the one employed in Example 1 was biologically treated in the following steps.

### Activated sludge treatment:

The procedure of Example 1 was repeated.

### Nitrification:

Ammonium ions (about 1000 ppm, NH₄-N 78 ppm) in the waste solution treated in the above steps were converted into nitrate ions by the same method as the one employed in the nitrification step of Example 2.

### Biological activated carbon treatment-1 (denitrification):

To the nitrated solution (nitrate ion: about 3400 ppm, NO₃-N 770 ppm) thus obtained was added methanol in such an amount as to give TOC of 1150 ppm. Then it was continuously treated by using an anaerobic fluidized bed packed with granular activated carbon (BAC, manufactured by Kureha Chemical Industry, Co., Ltd.) as carrier for a residence time (hydraulic retention time (HRT)) of 3 days. Thus a solution (COD_{Mn}: 250 ppm, TOC: 110 ppm, T-N: 5 ppm, Fe-EDTA: 20 ppm) was obtained.

### Biological activated carbon treatment-2:

The treated solution thus obtained was treated by using an aerobic fluidized bed packed with granular activated carbon (BAC, manufactured by Kureha Chemical Industry, Co., Ltd.) as carrier batchwise (1 cycle per day). The discharge of the solution from the treatment tank was regulated to 80 % of the whole solution per cycle. Thus a solution (COD_{Mn}: 5 ppm, TOC: 5 ppm, T-N: 5 ppm, Fe-EDTA: < 1 ppm) was obtained.

### EXAMPLE 4

### (A process for making photoprocessing waste solution harmless wherein a biological treatment tank was followed successively by a denitrification tank, a biological activated carbon treatment tank and a nitrification tank and the nitrified solution was returned back into the denitrification tank)

By using the same waste solution as the one employed in Example 1, a biological treatment was performed in the following manner.

### Activated sludge treatment:

The procedure of Example 1 was repeated.

### Denitrification-1:

In a cylindrical precipitation tank having a conical bottom for activated sludge-treated solution was located a denitrification tank which was in the same shape but a smaller size (the diameter of the cylinder corresponding to 60 % of that of the precipitation tank) and had an inlet for the sludge in the precipitation tank at the bottom. Then the contents of the tank were slowly stirred with a stirrer.

To the denitrification tank (MLSS 5,000 ppm), a nitrified solution was returned from the (later) nitrification step. The amount of the solution thus returned was regulated to thrice as much as the amount of the activated sludge-treated solution flowing into the denitrification tank. The denitrified solution was subjected to solid/liquid separation with the use of an UF membrane. Then the treated solution was transferred into the subsequent step, while the sludge was returned to the denitrification tank. The residence time in the denitrification tank was 4 hours (substantially 16 hours, since the solution was circulated).

The sludge precipitated onto the bottom of the precipitation tank was returned to the activated sludge-treatment tank. The return (feed back) was regulated to 0.3 times as much as the amount of the solution flowing into the activated sludge-treatment tank.

After the completion of the denitrification treatment, the obtained solution showed COD_{Mn} of 250 ppm, TOC of 99 ppm, ammonium ion (NH₄⁺-N) concentration of 200 ppm, nitrate ion concentration (NO₃⁻-N) of 115 ppm, Fe-EDTA concentration of 95 ppm and color of 1,000.

### Biological activated carbon treatment:

The denitrified solution was continuously treated by using an aerobic fluidized bed having a granular activated carbon (a mixture of F400 manufactured by TOYO CALGON with BAC manufactured by Kureha Chemical Industry, Co., Ltd., mixing ratio by bulk volume = 4 : 1) as a carrier, wherein the bulk volume of the activated carbon amounted to 40 % of the capacity of the treating tank. The residence time in the tank was 12 hours (substantially 2 days).

After the completion of the denitrification treatment, the obtained solution showed COD_{Mn} of 45 ppm, TOC of 23 ppm, ammonium ion (NH₄⁺-N) concentration of 195 ppm, nitrate ion concentration (NO₃⁻-N) of 120 ppm, Fe-EDTA concentration of 6 ppm and color of 35.

### Nitrification:

The method described in Example 2 was employed but a continuous treatment was performed and the residence time was 12 hours (substantially 2 days).

After the completion of the nitrification, the obtained solution showed COD_{Mn} of 40 ppm, TOC of 20 ppm, ammonium ion (NH₄⁺-N) concentration of 15 ppm, nitrate ion concentration (NO₃⁻-N) of 305 ppm, Fe-EDTA concentration of 5 ppm and color of 40.

### Denitrification-2:

Three quarters of the treated solution obtained from the nitrification step was returned to the above-mentioned denitrification step. The residual quarter was discharged and passed through a fixed bed type biological denitrification column packed with a granular porous ceramic carrier to thereby effect denitrification. As an organic material required in the denitrification, methanol was added in such a manner as to give TOC of 750 ppm (TOC/NO₃-N = 2.5/1). The denitrified solution was passed through a biological filtration column maintained in an aerobic state to thereby eliminate the organic matters remaining in the solution. The residence times in the denitrification column and in the aerobic biological filtration column were respectively 6 hours and 4 hours. The obtained solution showed COD_{Mn} of 25 ppm, TOC of 15 ppm, T-N concentration of 5 ppm, Fe-EDTA concentration of 5 ppm and color of 35.

In Example 3, the amount of the methanol required for the denitrification could be reduced by 60 % by returning the nitrified solution to the denitrification step following the activated sludge-treatment, compared with Example 2 wherein no such returning was effected. Thus a treated solution of improved qualities could be obtained at a lower cost.

### EXAMPLE 5

### (Relationship between activated carbon employed in biological activated carbon treatment and processing performance)

### (1) Kureha Chemical Industry BAC made from pitch

This case is exemplified by the biological activated carbon treatment in Example 2.

### (2) TOYO CALGON F400 made from coal

The procedure of Example 2 was repeated but using TOYO CALGON F400 as the activated carbon.

After the completion of the treatment, the obtained solution showed TOC of 15 ppm, color of 30 and Fe-EDTA concentration of 12 ppm.

### (3) Combined use of TOYO CALGON F400 with Kureha Chemical Industry BAC

The procedure of Example 2 was repeated but using a mixture of F400 with BAC (ratio by bulk volume = 4 : 1) in such an amount that the bulk volume of the mixture amounted to about 40 % of the capacity of the treating tank.

After the completion of the treatment, the obtained solution showed TOC of 15 ppm, color of 40 and Fe-EDTA concentration of 5 ppm.

As Example 5 shows, TOYO CALGON F400 (made from coal) exhibited a good degradition performance regarding TOC and color, while Kureha Chemical Industry BAC (made from a pitch) exhibited a good degradition performance regarding Fe-EDTA. Further, the combined use of these activated carbons exhibited a good performance regarding all of TOC, color and Fe-EDTA.

### EXAMPLE 6

### (Treatment of EDTA contained in waste acid washing solution of boiler (model solution))

Supposing that a boiler waste water was contaminated with a waste acid washing solution for boiler, a model waste water from a boiler was prepared. This model solution contained 1 g/l of Na-EDTA and 0.35 g/l of ammonium citrate and showed COD_{Mn} of 850 ppm, TOC of 396 ppm and an ammonium ion concentration of 79 ppm.

### Activated sludge-treatment:

The above-mentioned model solution was continuously treated (residence time: 12 hours) by using an activated sludge tank wherein the sludge recovered from the activated sludge processing plant in Ashigara Factory, Fuji Photo Film Co., Ltd. was suspended (MLSS 2,000 ppm). The obtained solution showed COD_{Mn} of 650 ppm, TOC of 300 ppm and ammonium ion concentration of 65 ppm.

### Biological activated carbon treatment:

The above-mentioned model solution was treated batchwise (2 days per cycle) by using a granular activated carbon (TOYO CALGON F400) which had been settled and fixed by inoculating the sludge recovered from the activated sludge processing plant in Ashigara Factory, Fuji Photo Film Co., Ltd. The inside of the treating column was maintained in an aerobic state by aerating from air diffusing pipes. The solution was liberated at a ratio of 80 % of the whole solution in the tank per cycle. After the completion of the treatment, EDTA contained in the solution had been mostly degraded and the obtained solution showed COD_{Mn} of 18 ppm and EDTA concentration of 2 ppm.

As discussed above, EDTA contained in various waste solutions can be degraded by the process of the present invention.

According to the present invention, hardly degradable components, which can be hardly degraded by the conventional techniques, can be degraded by using biological treatments commonly employed in the art. Thus the COD, TOC and T-N values and the content of residual organic aminocarboxylic acids (for example, Fe-EDTA) of a waste solution containing organic aminocarboxylic acids such as a photoprocessing waste solution can be largely reduced, thus establishing a process for making the photoprocessing waste solution harmless effectively, economically and constantly.

## Claims

1. A process for making a waste solution containing organic aminocarboxylic acids harmless which comprises biologically treating the waste solution containing organic aminocarboxylic acids followed by another biological treatment in the presence of activated carbon.

2. The process of claim 1, wherein said waste solution is a photoprocessing waste solution.

3. The process of claim 1 or 2 further comprising a step of biological nitrification and denitrification.

4. The process of claim 3 wherein the denitrification step is carried out before the nitrification step and the solution obtained from said nitrification step is returned to said denitrification step to thereby perform nitrification and denitrification.

5. The process of any of claims 1 to 4, wherein the biological treatment in the presence of activated carbon is performed under aerobic conditions.

6. The process of any of claims 1 to 5, wherein the biological treatment in the presence of activated carbon is performed by an activated carbon fluidized bed method.

7. The process of any of claims 1 to 6, wherein the biological treatment in the presence of activated carbon is performed by using a combination of an activated carbon made from pitch with an activated carbon made from coal or coconut shell.

## Patentansprüche

1. Verfahren zum Unschädlichmachen einer Abfalllösung, die organische Aminocarbonsäuren enthält, umfassend eine biologische Behandlung der Abfalllösung, die organische Aminocarbonsäuren enthält, und nachfolgend eine weitere biologische Behandlung in Gegenwart von Aktivkohle.

2. Verfahren nach Anspruch 1, wobei die Abfalllösung eine Abfalllösung aus einem photographischen Prozess ist.

3. Verfahren nach Anspruch 1 oder 2, weiterhin umfassend eine biologische Nitrifizierung und Denitrifizierung.

4. Verfahren nach Anspruch 3, wobei die Denitrifizierung vor der Nitrifizierung durchgeführt wird und die Lösung, die bei der Nitrifizierung erhalten wird, wieder der Denitrifizierung zugeführt wird, um die Nitrifizierung und die Denitrifizierung durchzuführen.

5. Verfahren nach einem der Ansprüche 1 bis 4, wobei die biologische Behandlung in Gegenwart von Aktivkohle unter aeroben Bedingungen durchgeführt wird.

6. Verfahren nach einem der Ansprüche 1 bis 5, wobei die biologische Behandlung in Gegenwart von Aktivkohle mit einem Fließbett aus Aktivkohle durchgeführt wird.

7. Verfahren nach einem der Ansprüche 1 bis 6, wobei die biologische Behandlung in Gegenwart von Aktivkohle unter Verwendung einer Kombination aus Aktivkohle, hergestellt aus Pech, und Aktivkohle, hergestellt aus Kohle oder Kokosnussschale, durchgeführt wird.

## Revendications

1. Procédé pour neutraliser une solution résiduaire contenant des acides aminocarboxyliques organiques, qui comprend le fait de soumettre à un traitement biologique la solution résiduaire contenant des acides aminocarboxyliques organiques, puis à un autre traitement biologique en présence de charbon activé.

2. Procédé selon la revendication 1, dans lequel ladite solution résiduaire est une solution résiduaire de traitement photographique.

3. Procédé selon la revendication 1 ou 2 comprenant en outre une étape de nitrification et une étape de dénitrification biologiques.

4. Procédé selon la revendication 3, dans lequel on effectue l'étape de dénitrification avant l'étape de nitrification et on renvoie la solution obtenue à partir de ladite étape de nitrification à ladite étape de dénitrification pour ainsi réaliser une nitrification et une dénitrification.

5. Procédé selon l'une quelconque des revendications 1 à 4, dans lequel le traitement biologique en présence de charbon activé est réalisé dans des conditions aérobiques.

6. Procédé selon l'une quelconque des revendications 1 à 5, dans lequel le traitement biologique en présence de charbon activé est réalisé via un procédé faisant appel à un lit fluidisé de charbon activé.

7. Procédé selon l'une quelconque des revendication 1 à 6, dans lequel le traitement biologique en présence de charbon activé est réalisé en utilisant une combinaison d'un charbon activé obtenu à partir de poix avec un charbon activé obtenu à partir de houille ou d'écorce de noix de coco.
